(19) Europäisches Patentamt
European Patent Office
Office européen des brevets

(11) EP 3 985 558 B1

(12) EUROPÄISCHE PATENTSCHRIFT

(45) Veröffentlichungstag und Bekanntmachung des Hinweises auf die Patenterteilung:
**06.11.2024 Patentblatt 2024/45**

(21) Anmeldenummer: **20201774.5**

(22) Anmeldetag: **14.10.2020**

(51) Internationale Patentklassifikation (IPC):
***G06V 10/44*** (2022.01) ***G06V 20/58*** (2022.01)
***G06F 18/214*** (2023.01) ***G06F 18/22*** (2023.01)
***G06F 18/2413*** (2023.01) ***G06F 18/2431*** (2023.01)
***G06F 18/2433*** (2023.01) ***G06N 3/045*** (2023.01)
***G06N 3/047*** (2023.01) ***G06N 3/08*** (2023.01)

(52) Gemeinsame Patentklassifikation (CPC):
**G06V 20/58; G06F 18/2155; G06F 18/22; G06F 18/2414; G06F 18/2431; G06F 18/2433; G06N 3/045; G06N 3/047; G06N 3/08; G06V 10/454**

# (54) VERFAHREN SOWIE VORRICHTUNG ZUM KLASSIFIZIEREN VON SENSORDATEN

METHOD AND DEVICE FOR CLASSIFYING SENSOR DATA

PROCÉDÉ AINSI QUE DISPOSITIF DE CLASSIFICATION DES DONNÉES DE CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.04.2022 Patentblatt 2022/16**

(73) Patentinhaber: **MicroVision, Inc.
Redmond, WA 98052 (US)**

(72) Erfinder: **NITSCH, Julia
22143 Hamburg (DE)**

(74) Vertreter: **RGTH
Patentanwälte PartGmbB
Neuer Wall 10
20354 Hamburg (DE)**

(56) Entgegenhaltungen:

- **MATTHEW WALLINGFORD ET AL: "In the Wild: From ML Models to Pragmatic ML Systems", ARXIV.ORG, CORNELL UNIVERSITY LIBRARY, 201 OLINE LIBRARY CORNELL UNIVERSITY ITHACA, NY 14853, 6 July 2020 (2020-07-06), XP081716570**
- **XINGYU CHEN ET AL: "A Boundary Based Out-of-Distribution Classifier for Generalized Zero-Shot Learning", ARXIV.ORG, CORNELL UNIVERSITY LIBRARY, 201 OLIN LIBRARY CORNELL UNIVERSITY ITHACA, NY 14853, 9 August 2020 (2020-08-09), XP081738420**
- **KIMIN LEE ET AL: "A Simple Unified Framework for Detecting Out-of-Distribution Samples and Adversarial Attacks", ARXIV.ORG, CORNELL UNIVERSITY LIBRARY, 201 OLIN LIBRARY CORNELL UNIVERSITY ITHACA, NY 14853, 11 July 2018 (2018-07-11), XP081415333**
- **ROUSSEEUW PETER J ET AL: "Robust Distances: Simulations and Cutoff Values", DIRECTIONS IN ROBUST STATISTICS AND DIAGNOSTICS, PART II, vol. 34, 1991, pages 195 - 203, XP055787412, DOI: 10.1007/978-1-4612-4444-8_11**
- **KIMIN LEE ET AL: "Training Confidence-calibrated Classifiers for Detecting Out-of-Distribution Samples", ARXIV.ORG, CORNELL UNIVERSITY LIBRARY, 201 OLIN LIBRARY CORNELL UNIVERSITY ITHACA, NY 14853, 26 November 2017 (2017-11-26), XP081319903**
- **ENGKARAT TECHAPANURAK ET AL: "Hyperparameter-Free Out-of-Distribution Detection Using Softmax of Scaled Cosine Similarity", ARXIV.ORG, CORNELL UNIVERSITY LIBRARY, 201 OLIN LIBRARY CORNELL UNIVERSITY ITHACA, NY 14853, 25 May 2019 (2019-05-25), XP081535684**
- **KELVIN WONG ET AL: "Identifying Unknown Instances for Autonomous Driving", ARXIV.ORG, CORNELL UNIVERSITY LIBRARY, 201 OLIN LIBRARY CORNELL UNIVERSITY ITHACA, NY 14853, 24 October 2019 (2019-10-24), XP081520628**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 985 558 B1

## Beschreibung

Die vorliegende Erfindung betrifft ein Verfahren sowie eine Vorrichtung zum Klassifizieren von Sensordaten nach den unabhängigen Ansprüchen.

## Stand der Technik

Insbesondere in der fahrerlosen Navigation von Fahrzeugen ist eine Klassifikation von mittels Sensoren erkannten Objekten, wie beispielsweise Verkehrsteilnehmern, essentiell, um darauf basierend navigieren zu können.

Aus dem Stand der Technik ist bekannt, dass einem erkannten Objekt mindestens eine zuvor definierte Klasse zugeordnet wird. Allerdings ist es gleich entscheidend, dass erkannt wird, wenn ein Objekt nicht unter die vorgegebenen Klassen fällt. Nur dann kann gewährleistet werden, dass eine Entscheidung hinsichtlich der Steuerung des Fahrzeuges nicht auf falschen Voraussetzungen basiert.

Diese Problematik ist umso wichtiger, wenn neuronale Netzwerke zur Klassifikation eingesetzt werden. Hinsichtlich neuronaler Netzwerke ist bekannt, dass diese nur gut zur Auswertung von Daten funktionieren, die dem neuronalen Netzwerk während des Trainings zumindest auf ähnliche Weise präsentiert wurden, d.h. wenn diese Daten der Verteilung der Trainingsdaten folgen.

Die Druckschrift KELVIN WONG ET AL: "Identifying Unknown Instances for Autonomous Driving", ARXIV.ORG, CORNELL UNIVERSITY LIBRARY, ITHACA, NY 14853, 24. Oktober 2019 (2019-10-24), offenbart ein Verfahren zur Erkennung unbekannter Objektkategorien für die Anwendung in autonomen Fahrzeugen. Das Verfahren verwendet neuronale Netzwerke zur Verarbeitung von Lidar-Datenpunkten.

"In the Wild: From ML Models to Pragmatic ML Systems" von Matthew Wallingford et al beschreibt einen Ansatz zur Entwicklung pragmatischer ML Systeme.

"A Boundary Based Out-of-Distribution Classifier for Generalized Zero-Shot Learning" von Xingyu Chen et al betrifft einen Out-of-Distribution Classifier.

## Darstellung der Erfindung: Aufgabe, Lösung, Vorteile

Der vorliegenden Erfindung liegt somit die Aufgabe zugrunde, ein Verfahren zum Klassifizieren von Sensordaten derart zu verbessern, dass zuverlässig eingeschätzt werden kann, ob ein unbekanntes Szenario vorliegt, das einem zur Klassifikation eingesetzten neuronalen Netzwerk fremd ist.

Gelöst wird die vorgenannte Aufgabe durch ein Verfahren zum Klassifizieren von Sensordaten, das eine Bereitstellung von einem jeweiligen gemittelten Merkmalsvektor für eine Vielzahl von Klassen umfasst. Für jede Klasse wird somit ein eigener gemittelter Merkmalsvektor bereitstellt.

Das Verfahren verwendet einen Klassifikator, wobei es sich bei dem Klassifikator um ein auf Basis von Trainingsdaten trainiertes neuronales Netzwerk handelt. Bei der Vielzahl von Klassen handelt es sich insbesondere um eine abgeschlossene und vordefinierte Anzahl von Klassen, auf Basis derer das neuronale Netzwerk zuvor trainiert wurde. Bei dem gemittelten Merkmalsvektor handelt es sich in anderen Worten um einen Durchschnittsvektor, der für jede zuvor definierte Klasse bestimmt wird.

Dabei umfasst das Verfahren ein Ermitteln eines Merkmalsvektors auf Basis von Sensordaten mittels des Klassifikators.

Ferner umfasst das Verfahren mittels des Klassifikators eine jeweilige Ermittlung einer Kosinusähnlichkeit zwischen dem zuvor ermittelten Merkmalsvektor und einem jeweiligen gemittelten Merkmalsvektor für die Vielzahl von Klassen, einen Vergleich der jeweiligen Kosinusähnlichkeit mit einem für jede Klasse zuvor ermittelten Schwellenwert und ein Erkennen eines nicht von der Vielzahl der Klassen vertretenden Szenarios bei Unterschreitung der Schwellenwerte für alle Klassen. Das Verfahren ist somit dazu ausgebildet, Anomalien in der Klassifikation von Sensordaten zu erkennen.

Die Kosinusähnlichkeit stellt vor allem einen Zahlenwert dar, der aussagt, wie ähnlich sich Vektoren sind, wobei die Zahl zwischen +1 und -1 liegt. Wenn die Kosinusähnlichkeit beispielsweise +1 für eine Klasse ist, entspricht der entsprechende Merkmalsvektor exakt dem gemittelten Merkmalsvektor der entsprechenden Klasse.

Das neuronale Netzwerk wurde zuvor auf Basis von Trainingsdaten trainiert. Diese Trainingsdaten umfassen die Vielzahl von Klassen. Insbesondere repräsentiert jede Klasse eine Objektkategorie, bspw. einen Fußgänger oder ein Fahrrad. Insbesondere umfassen die Trainingsdaten für jede Klasse eine Vielzahl von Trainingssamples, wobei die Trainingssamples das von der Klasse vertretende Objekt in möglichst vielen und unterschiedlichen Szenarien darstellt. Jedes Trainingssample umfasst somit ein Objekt in einer Umweltbedingung. Bei den Trainingssamples handelt es sich vorzugsweise um Bilddaten oder Lidar-Daten, vor allem Punktwolken. Natürlich können dabei nicht sämtliche mögliche Szenarien abgedeckt sein.

Ein Szenario wird vorzugsweise durch das umfasste Objekt und die Umweltbedingungen, bspw. die Wetterbedingung, definiert. Ein Szenario kann vor allem ein Objekt in Kombination in einer Wetterbedingung, wie bspw. Schnee, Regen, Nebel, Staub, Hagel, insbesondere in Abhängigkeit von der Stärke der Wetterbedingung, bspw. der Dichte des Nebels, darstellen. Ein Fußgänger bei normaler Sicht (bspw. bei bedecktem Himmel) stellt ein anderes Szenario dar als ein Fußgänger bei einem Hagelsturm. Beide fallen jedoch unter die Klasse "Fußgänger", wobei das Szenario "Fußgänger im Hagelsturm" ggfs. nicht in den Trainingsdaten umfasst war, da ein solches äußerst selten vorkommt. Ein Verfahren zur Objekterkennung soll ein Objekt in möglichst allen möglichen Umweltbedingungen erkennen, jedoch ebenfalls seine Grenzen wissen, in dem Sinne, dass das Verfahren erkennt, wenn es ein Objekt auf Basis der vorliegenden Szenarios nicht mit ausreichender Konfidenz erkennen kann, da es nicht in den Trainingsdaten repräsentiert war.

Ein nicht in den Trainingsdaten vertretendes Szenario, in anderen Worten ein unbekanntes oder fremdes Szenario, kann somit eine bisher nicht erfasste, d.h. neue, Objektkategorie und/oder eine bisher nicht umfasste, d.h. neue, Umweltbedingung, vor allem Wetterbedingung, einer in den Trainingsdaten umfassten Objektkategorie darstellen. Wird der Schwellenwert mindestens einer Klasse überschritten, kann das Verfahren das Zuordnen der entsprechenden Klasse und vorzugsweise einer Konfidenz umfassen. Insbesondere kann die Kosinusähnlichkeit als Konfidenz zugeordnet werden.

Das Verfahren ist in der Lage, bei einer Unterschreitung der Schwellenwerte der Kosinusähnlichkeit für alle Klassen zu erkennen, dass ein Szenario vorliegt, das nicht von der Vielzahl der Klassen abgedeckt wurde. Das neuronale Netzwerk ist somit in der Lage eine Abweichung der zu erwartenden Ergebnisse, die auf dessen Training beruhen, zu erkennen. In anderen Worten wird ermöglicht, dass eine Entscheidung getroffen wird, ob die Klassifikation valide war oder nicht, was sich erheblich auf die weitere Verarbeitung der Informationen für die fahrerlose Navigation von Fahrzeugen auswirken kann.

Das Verfahren kann somit dazu ausgebildet sein, ein Szenario einer bestimmten Klasse in den Sensordaten zu erkennen, allerdings bei der Unterschreitung aller Schwellenwerte, zu erkennen, dass das Szenario nicht ausreichend in den Trainingsdaten repräsentiert ist. Ferner können auch Spezialfälle vorliegen, beispielsweise ein Schlagloch oder eine Unfallstelle mit Fahrzeugteilen auf der Fahrbahn, wobei das Verfahren diese als nicht durch die Trainingsdaten repräsentiert erkennt, da sie eine wirkliche neue Klasse, in anderen Worten Objektkategorie, darstellen. Auch ist bspw. ein Szenario mit einem neuen Objekt (bspw. einem neuen Verkehrsteilnehmer), das nicht in den Trainingsdaten umfasst war, ein nicht in den Trainingsdaten vertretendes Szenario, da die gesamte Klasse nicht vertreten ist. Ein Beispiel wäre ein Lastenrad, das zwar einem Fahrrad gleicht, jedoch dennoch eine eigene Klasse darstellt. In allen vorgenannten Fällen wird festgestellt, dass das erkannte Szenario nicht in den Trainingsdaten vertreten ist. Bei einem von der Vielzahl der Klassen nicht vertretenen Szenarios handelt es sich somit um ein Out-of-Distribution-Sample beziehungsweise um eine Out-of-Distribution-Detection.

Das Verfahren unterscheidet sich somit von aus dem Stand der Technik bekannten Verfahren, die auf Basis der Ähnlichkeit mit den Klassen jedem Szenario eine Klassifikation zuordnen. Das vorliegende Verfahren kann somit auch in sicherheitskritischen Anwendungen, wie vorzugsweise dem fahrerlosen Navigieren eines Fahrzeuges, eingesetzt werden, da der Klassifikator dazu ausgebildet ist, unbekannte Szenarien sicherheitskritisch als solche zu erkennen. Dies ermöglicht somit nicht nur eine Fehlervermeidung während der Anwendung, sondern auch die Detektion von neuartigen Szenarien, sodass diese vermehrt in die Trainingsdaten aufgenommen werden können und so eine Abdeckung aller vorkommenden Szenarien gewährleistet werden können.

Ferner kann das Verfahren eine Ermittlung einer Mahalanobis-Distanz zwischen einer Kovarianzmatrix, dem gemittelten Merkmalsvektor und dem ermittelten Merkmalsvektor auf Basis der Sensordaten für jede Klasse umfassen. Dies dient insbesondere dazu nicht von der Vielzahl der Klassen berücksichtige Szenarien besser zu erkennen, da die Kosinusähnlichkeit nicht die Verteilung der Merkmale berücksichtigt, sondern nur deren gemittelten Werte. Deswegen kann zusätzlich die Mahalanobis-Distanz werden.

Da die Mahalanobis-Distanz nicht "bounded" d.h. nicht begrenzt, ist, was notwendig ist, um diese in Bezug auf Konfidenzen einzuschätzen, wird ein Bezugswert, insbesondere der Funktionswert der cummulative density function, basiert auf einer $\chi^2$-Verteilung bestimmt. Dies funktioniert, da bekannt ist, dass die Mahalanobis-Distanz der $\chi^2$-Verteiiung folgt, wenn die Anzahl der Freiheitsgerade der Dimension der Merkmale entspricht. Der Bezugswert für jede Klasse wird bestimmt, indem man den Funktionswert der $\chi^2$-Verteiiung an der Stelle der jeweiligen Mahalanobis-Distanz ermittelt. In anderen Worten ist die Mahalanobis-Distanz der Klasse der X-Wert, der in die $\chi^2$-Verteiiung eingesetzt wird. Der entsprechende Y-Wert wird von einer Eins abgezogen um den Bezugswert für die Klasse zu erhalten. Es kann erneut ein Vergleich der jeweiligen Bezugswerte mit einem für jede Klasse zuvor festgelegten Schwellenwert erfolgen. Bei Unterschreitung der Schwellenwerte für alle Klassen wird ein nicht von der Vielzahl der Klassen vertretenden Szenarios erkannt. Diese doppelte Kontrolle mittels der Kosinusähnlichkeit und der Mahalanobis-Distanz dient einer besonders hohen Sicherstellung, dass Szenarien, die in der Vielzahl der Klassen nicht berücksichtigt sind, auch erkannt werden.

Insbesondere kann das Verfahren bei Unterschreitung der Schwellenwerte für alle Klassen das erkannte Szenario im Vergleich zu den Trainingsdaten als unbekannt labeln, in anderen Worten kennzeichnen.

Ferner kann dem erkannten Szenario eine zuvor definierte minimale Konfidenz zugeordnet werden. Insbesondere kann jeder Klasse eine minimale Konfidenz zugeordnet werden. Insbesondere liegt die minimale zuvor definierte Konfidenz deutlich unter der entsprechenden Kosinusähnlichkeit für jede Klasse. Diese minimale Konfidenz kann beispielsweise Null entsprechen.

Das Verfahren kann ein Abspeichern der Sensordaten, in denen das nicht vertretende Szenario erkannt wurde, als Ergänzung zu den Trainingsdaten umfassen. Auf diese Weise können die Trainingsdaten, die zum Training des neuronalen Netzes eingesetzt wurden, ergänzt werden. So können automatisiert Sensordaten zu neuen Szenarien abgespeichert werden. Dadurch wird das mühsame manuelle Sichten von Szenarien beim "Einfahren" von Trainingsdaten, das nicht nur zeitaufwendig und somit teuer als auch fehleranfällig ist, ersetzt. Bei der Datenaufzeichnung für Trainingsdaten müssen Stunden an Sensordaten aufgezeichnet und manuell evaluiert bzw. gelabelt werden, um die Sicherheit eines Verfahrens zur Klassifikation zu gewährleisten. Dabei werden natürlicherweise "reguläre" Szenarien häufiger aufgezeichnet als zum Beispiel Szenarien mit sehr seltenen Wetterphänomen oder mit seltenen Verkehrsteilnehmern. Das vorliegende Verfahren ermöglicht solche Sensordaten von nicht in den Trainingsdaten umfassten Szenarien abzuspeichern und vorzugsweise in einem nächsten Schritt, beispielsweise bei einem nachträglichen "Update" des Klassifikators zu verwenden, um diesen auch bezüglich der neuen Szenarien zu trainieren. Davor kann ein manuelles Labeln der abgespeicherten Sensordaten erfolgen, um dem auf Basis der Trainingsdaten unbekannten Szenario eine neue Klasse zuzuordnen.

Bei den Sensordaten handelt es sich erfindungsgemäß um Lidar-Daten. In anderen Worten handelt es sich bei den Sensordaten insbesondere um eine Punktwolke. Das Verfahren kann insbesondere das Aufnehmen der Sensordaten mittels eines entsprechenden Sensors, insbesondere eines Lidar-Sensors, vorzugsweise eines solid-state Lidar-Sensors, umfassen. Dabei kann das Verfahren eine Vorverarbeitung der Sensordaten umfassen. Insbesondere kann eine Einheit zur Vorverarbeitung in einer Punktwolke Punkte, die offenbar von der Reflektion an einem gemeinsamen Objekt erfolgen, erkennen. Diese zusammenhängenden Punkte, in anderen Worten Cluster, können als vorverarbeitete Sensordaten dem Klassifikator weitergeben werden.

Das neuronale Netzwerk des Klassifikators kann insbesondere funktionell in eine erste Einheit und eine zweite Einheit unterteilt werden. Dabei umfassen die erste Einheit und die zweite Einheit verschiedene Layer des neuronalen Netzwerkes, wobei die Unterscheidung nach erster Einheit und zweiter Einheit hinsichtlich deren Funktion erfolgt. Die erste Einheit ist als Feature Extractor zur Extraktion von Merkmalen aus den Sensordaten ausgebildet. Die zweite Einheit ist als Klassifikationseinheit ausgebildet. Die erste Einheit dient zur Vorbereitung der Sensordaten für die zweite Einheit.

Insbesondere umfasst der Feature Extractor ein "multi layer perceptron" (MLP-) Netzwerk, das mindestens ein "multi layer perceptron" als Layer (MLP Layer) umfasst. Jedes Layer enthält eine Vielzahl von künstlichen Neuronen. Insbesondere umfasst das MLP-Netzwerk eine Vielzahl von MLP Layern. Die MLP Layer sind vorzugsweise alle jeweils durch eine nicht-lineare Funktion, insbesondere eine sogenannte ReLU-Funktion, aktiviert. Eine ReLU-Funktion ist eine Funktion, die als Y Wert einem negativen x-Wert Null zuweist, während sie ansonsten eine lineare Funktion mit Steigung 1 darstellt. Das MLP hat vorzugsweise mindestens 3, insbesondere mindestens 5, Layer, die mehrere Unterschichten umfassen können.

Ferner kann das MLP Netzwerk mindestens ein fully connected Layer umfassen, das auch durch eine nicht-lineare Funktion, insbesondere eine sogenannte ReLU-Funktion, aktiviert sein kann.

Das MLP Netzwerk ist in der Lage Input in Form von Punktwolken zu verarbeiten. Output des Netzwerks sind somit Merkmale, insbesondere in Form von Vektoren. Dabei weist der letzte Layer insbesondere keine Aktivierung auf. Zuletzt kann eine softmax Normalisierung erfolgen. Als Ergebnis - vor der softmax Normalisierung, wird vorzugsweise ein Bottle-Neck-Vektor erhalten. Der Bottle Neck Vektor ist somit das Ergebnis des letztes Layers des neuronalen Netzwerkes vor einer möglichen softmax Normalisierung und stellt einen Merkmalsvektor dar.

Alternativ kann der Feature Extractor auch ein CNN (convolutional neural network) sein. Hierfür muss die Punktwolke, die als Sensordaten vorliegt, allerdings davor in eine Bildrepresentation transformiert werden. Das CNN umfasst insbesondere eine Vielzahl von Layern. Insbesondere umfasst das CNN abwechselnd ein convolutional Layers und pooling Layers. Das CNN ist dazu ausgebildet Striche, L-Merkmale und/oder Kreismerkale zu extrahieren. Ein Merkmal kann auch als Feature bezeichnet werden.

Die zweite Einheit des Klassifikators umfasst mindestens eine, vorzugsweise zwei oder drei fully connected Layern, die sich direkt an das letzte Layer der ersten Einheit anschließen. Vorzugsweise besteht die zweite Einheit aus der mindestens einen fully connected Layer. Jedes Layer umfasst eine Vielzahl von künstlichen Neuronen. Die zweite Einheit dient zur Verarbeitung der Merkmalsvektoren der ersten Einheit.

Erfindungsgemäß umfasst das Verfahren ein Training des Klassifikators, und zwar des neuronalen Netzwerkes des Klassifikators, anhand der Trainingsdaten, wobei die Trainingsdaten erste Trainingssamples und zweite Trainingssamples umfassen. Dabei werden die zweiten Trainingssamples mittels eines Generative Adversarial Networks (GAN), aufweisend einen Generator und einen Diskriminator, erzeugt, während die ersten Trainingssamples auf einer Aufnahme von Szenarien mittels eines Sensors basieren. Die ersten Trainingsdaten stellen somit die typischen Trainingsdaten dar, die mittels entsprechender Sensoren eingefahren werden, das heißt in tatsächlichen Situationen aufgenommen wurden. Die ersten Trainingssamples umfassen somit ein insbesondere manuell vergebenes Label.

Der Klassifikator wird insbesondere auf Basis eines Cross Entropy Loss auf Basis der ersten Trainingssamples addiert mit einer Kullback-Leibler (KL)-Divergenz auf Basis der zweiten Trainingssamples durchgeführt. Die KL-Divergenz berechnet den Unterschied zwischen zwei Verteilungen und durch Addition der Divergenz zu einem Loss wird erreicht, dass sich die Verteilungen entsprechend angleichen. Die KL-Divergenz wird hierzu additiv zum Loss hinzugefügt. Ziel ist es, dass der Klassifikator Objekte aus den zweiten Trainingssamples mit einer gleich verteilten Wahrscheinlichkeit für alle Klassen erkennt, sodass im Anwendungsfall die Kosinusähnlichkeit dieser mit allen gemittelten Merkmalsvektoren der ersten Trainingssamples unterhalb der entsprechenden Schwellenwerte liegt. Das Training erfolgt auf Basis der manuellen Label der ersten Trainingssamples und den mittels des Klassifikators erzeugten Label durch einen entsprechenden Vergleich mittels des Cross Entropy Loss sowie der additiv hinzugefügten KL-Divergenz und einer Anpassung der Gewichte des neuronalen Netzwerkes des Klassifikators. Da im Training die gemittelten Merkmalsvektoren nicht vorliegen, wird im Training auf Basis von Unsicherheiten gearbeitet, die die Softmax Normalisierung ausgibt. Ziel ist es im Training, dass die Unsicherheiten bei zweiten Trainingssamples gleich auf alle Klassen verteilt wird, sodass dann im Anwendungsfall, d.h. nach abgeschlossenen Training, bei einem Szenario, das nicht in den Trainingsdaten vertreten ist, die Kosinusähnlichkeiten unter den Schwellwerten liegen und somit als solche identifiziert werden.

Bei dem Generator als auch bei dem Diskriminator des GAN kann es sich um künstliche neuronale Netzwerke handeln. Dabei generiert der Generator sogenannte Kandidaten, hier zweite Trainingssamples, die der Diskriminator bewertet. Das Ziel des Generators ist es zu lernen, Ergebnisse nach einer bestimmten Verteilung, zu erzeugen. Der Diskriminator wird dagegen trainiert, die Ergebnisse des Generators von den Daten aus der echten, vorgegebenen Verteilung zu unterscheiden. Die Zielfunktion des Generators besteht darin, Ergebnisse zu erzeugen, die der Diskriminator nicht unterscheiden kann. Auf diese Weise werden zweite Trainingssamples erzeugt, die an den Entscheidungsgrenzen des Klassifikators liegen. Der Klassifikator bewertet die Ergebnisse mit einer gleichverteilten Wahrscheinlichkeit. Deshalb wird zum Generator Loss ebenfalls die KL-Divergenz additiv hinzugefügt.

Das Verfahren umfasst insbesondere ein Training des GAN, vor allem des Generators und des Diskriminators, wobei das Training des Klassifikators und des GAN gemeinsam erfolgt. Ferner kann auch das Training des Feature Extractors gemeinsam erfolgen.

Das Training des Generators wird auf Basis eines Binary Cross Entropy Loss auf Basis der zweiten Trainingssamples, addiert mit einer KL-Divergenz auf Basis der zweiten Trainingssamples durchgeführt. Es werden die zweiten Trainingssamples mittels des Diskriminators bewertet. Dabei bewertet der Diskriminator ursprünglich erste Trainingssamples bspw. mit einer Eins, während zweite Trainingssamples anders, bspw. mit einer Null, bewertet werden. Der Binary Cross Entropy Loss bezieht sich auf die Bewertung der zweiten Trainingssamples durch den Diskriminator. Die KL-Divergenz basiert auf einer Klassifikation der zweiten Trainingssamples durch den Klassifikator verglichen mit einer gleichverteilten Wahrscheinlichkeit. Es werden die Gewichte des Generators im Training so angepasst, dass er zweite Trainingssamples erzeugt, die der Diskriminator gleich wie erste Trainingssamples bewertet, jedoch weist der Klassifikator eine gleichverteilte Wahrscheinlichkeit auf alle Klassen verteilt zu.

Auch der Diskriminator wird auf Basis eines Cross Entropy Loss, insbesondere Binary Cross Entropy Loss, trainiert, und zwar auf Basis der ersten Trainingssamples und der von dem Generator erzeugten zweiten Trainingssamples. Das gemeinsame Training des Klassifikators und des GAN dient dazu, dass der Generator nicht nur versucht, den Diskriminator zu täuschen, sondern auch unbekannte Szenarien für den Klassifikator erzeugt, die dieser mit einer gleichverteilten Wahrscheinlichkeit bewertet. Dadurch wird die Zuverlässigkeit des Erkennens von unbekannten Szenarios wesentlich erhöht. Auch hier werden beim Training insbesondere die Gewichte der neuronalen Netzwerke angepasst.

Der Diskriminator kann insbesondere mindestens eine, vorzugsweise zwei convolutional Layer, aufweisen und mit einer ReLu-Funktion, vor allem einer leaky ReLU-Funktion, aktiviert sind. Eine leaky ReLu-Funktion ist eine Funktion, die einem x-Wert als Y Wert einem kleinen Wert größer als Null (bspw. 0,01x) zuweist, während sie ansonsten eine lineare Funktion mit Steigung 1 darstellt. Zuletzt wird vorzugsweise eine fully connected Layer mit einem einzigen Output Neuron eingesetzt. Insbesondere ist der Diskriminator wie folgt ausgebildet:

Conv. 64@5x5; s=2x2

Leaky ReLU

DropOut r=0.3

Conv. 128@5x5; s=2x2

Leaky ReLU

DropOut r=0.3

Fully Connected Net.

Der Generator kann aus einer fully connected layer mit einer Batch-Normalisierung und einer Aktivierung mittels einer "Leaky ReLU" bestehen. Nachfolgend können drei transponierte Convolutional Blocks folgen. Insbesondere jeweils mit 5x5 Kernel sowie einer Batch-Normalisierung und einer Leaky ReLU Aktivierung. Das letzte Layer kann aus einer transponierten Convolutional Layer folgen, vorzugsweise erneut mit 5x5 Kernel Größe.

Insbesondere ist der Generator wie folgt ausgebildet:

Fully Connected Net.
Batch Normalization
Leaky ReLU
Transposed Conv. 64@5x5; s=1x1
Batch Normalization
Leaky ReLU
Transposed Conv. 128@5x5; s=2x2
Batch Normalization
Leaky ReLU
Transposed Conv. 64@5x5; s=2x2
Batch Normalization
Leaky ReLU
Transposed Conv. 3@5x5; s=2x2

Das Training kann vor allem wie folgt erfolgen:
Es wird zunächst der Loss des Diskriminators, nämlich der Cross Entropy Loss, erzeugt, um erste Trainingsdaten und zweite Trainingsdaten, die vom Generator stammen, zu unterscheiden. Somit ist der Diskriminator Loss definiert als die Summe des binären Cross Entropy Loss der ersten Trainingssamples und der generierten zweiten Trainingssamples. $D_{in}$ steht hierbei für ein erstes Trainingssample. "noise" ist ein 100 dimensionaler Zufallsvektor erzeugt aus einer Standard Gaußverteilung (mean=0, stddev=1). Dieser Zufallsvektor ist Input für den Generator.

$$\mathrm{Loss_d} = \mathrm{BCE}\big(\mathrm{disc}(\mathrm{D_{in}}), \underline{\mathbf{1}}\big) + \mathrm{BCE}\big(\mathrm{disc}\big(\mathrm{gen}(\mathrm{noise})\big), \underline{\mathbf{0}}\big)$$

Der Generator wird nicht nur trainiert, den Diskriminator zu täuschen, sondern auch zweite Trainingssamples zu erzeugen, und zwar an den Entscheidungsgrenzen des Klassifikators. Somit ist der Loss des Generators definiert als:

$$\mathrm{Loss_g} = \mathrm{BCE}\big(\mathrm{disc}\big(\mathrm{gen}(\mathrm{noise})\big), \underline{\mathbf{1}}\big) + \mathrm{KL}\left[\mathrm{cls}\big(\mathrm{gen}(\mathrm{noise})\big) \,||\, \frac{\mathbf{1}}{|\mathrm{c}|}\right],$$

wobei KL für die KL-Divergenz steht, |c| die Nummer der Klassen beziehungsweise die Anzahl der Klassen und 1/|c| die gleichverteilte Wahrscheinlichkeit über die Klassen darstellt. Auf die oben beschriebene Weise werden die entsprechenden Gewichte der neuronalen Netze angepasst, um den Diskriminator zu täuschen, dass die zweiten Trainingssamples der Verteilung des ersten Trainingssamples folgen und ferner eine gleiche Verteilung der Wahrscheinlichkeiten des Klassifikators auf zweite Trainingssamples zu erreichen. Dies ist wichtig, da dann sichergestellt ist, dass ein unbekanntes Szenario unter alle Schwellenwerte der Vielzahl von Klassen fällt.

Der Loss des Klassifikators ist definiert als:

$$\mathrm{Loss_{cls}} = \mathrm{CE(cls(D_{in}), labels)}\ ) \ + KL\left[cls\left(gen(noise)\right)||\frac{1}{|c|}\right]$$

Alle Gewichte werden mit der Xavier Uniform Initializer initialisiert.

Vorteilhafterweise wird für jede Klasse ein gemittelter Merkmalsvektor ermittelt, wobei die Trainingsdaten eine Anzahl von ersten Trainingssamples pro Klasse umfasst und wobei der gemittelte Merkmalsvektor einer Klasse durch die folgenden Schritte ermittelt wird:
Zunächst wird insbesondere mittels des Klassifikators (vor der softmax Normalisierung) ein Merkmalvektor für jedes erste Trainingssample einer Klasse ermittelt. Dabei handelt es sich insbesondere um den Bottle-Neck-Vektor. Diese Merkmalsvektoren werden addiert zum Erhalten eines addierten Merkmalsvektors. Dieser wird durch die Anzahl der ersten Trainingssamples der entsprechenden Klasse dividiert. Als Ergebnis erhält man den gemittelten Merkmalsvektor einer Klasse. Bei dem gemittelten Merkmalsvektor handelt es sich insbesondere um den gemittelten Bottle-Neck-Vektor der entsprechenden Klasse. Die gemittelten Merkmalsvektoren werden insbesondere nach einem Training des Klassifikators ermittelt.

Es wird für jede Klasse erfindungsgemäß der Schwellenwert ermittelt, wobei der Schwellenwert einer Klasse durch die folgenden Schritte ermittelt wird: Es wird zunächst die Kosinusähnlichkeit der Merkmalsvektoren jedes ersten Trainingssamples mit dem gemittelten Merkmalsvektor der Klasse ermittelt. Nun werden die ermittelten Kosinusähnlichkeiten entweder gemittelt und somit eine gemittelte Kosinusähnlichkeit berechnet oder es wird die kleinste Kosinusähnlichkeit aus der Menge der Kosinusähnlichkeiten der ersten Trainingsdaten der Klasse bestimmt. Der Schwellenwertwird entweder als die gemittelte Kosinusähnlichkeit oder die kleinste Kosinusähnlichkeit festgelegt.

Beispielsweise kann die Schwelle auf 0,85 festgelegt worden sein. Wird nun eine Kosinusähnlichkeit zwischen einem ermittelten Merkmalsvektor und dem gemittelten Merkmalsvektor von 0,92 ermittelt, kann die entsprechende Klasse mit einer hohen Konfidenz ausgegeben werden und somit eine valide Erkennung bestätigt werden.

Insbesondere ist das vorliegende Verfahren zum Klassifizieren von Sensordaten Teil eines Verfahrens zur fahrerlosen Navigation eines Fahrzeuges.

In einem weiteren Aspekt umfasst die Erfindung eine Vorrichtung zum Klassifizieren von Sensordaten, wobei die Vorrichtung einen Klassifikator umfasst, und dazu ausgebildet ist, ein oben beschriebenes Verfahren durchzuführen. Insbesondere ist der Klassifikator wie oben beschrieben trainiert. Zudem kann die Vorrichtung ein oben beschriebenes GAN, das insbesondere wie oben beschrieben trainiert ist, umfassen. Der Klassifikator kann insbesondere ein Entscheidungsmodul umfassen, das auf Basis der Schwellenwerte und der ermittelten Kosinusähnlichkeiten und vorzugsweise Mahalanobis-Distanzen eine Klasse und/oder eine Konfidenz und/oder ein Label als unbekannt zuordnet. Insbesondere dient die Vorrichtung zur Navigation eines fahrerlosen Fahrzeuges.

Zudem betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren zur Klassifizierung von Sensordaten in Zusammenspiel mit einer oben beschriebenen Vorrichtung durchzuführen.

Ferner umfasst die Erfindung ein Computerprogrammprodukt, das ein oben beschriebenes computerlesbares Speichermedium umfasst.

## Kurze Beschreibung der Figuren

Es zeigen in rein schematischer Darstellung

Figur 1: ein Verfahrensschema eines erfindungsgemäßen Verfahrens,
Figur 2: ein Training eines Klassifikators und eines GAN, und
Figur 3: eine Ermittlung eines gemittelten Merkmalsvektors.

## Bevorzugte Ausführungsformen der Erfindung

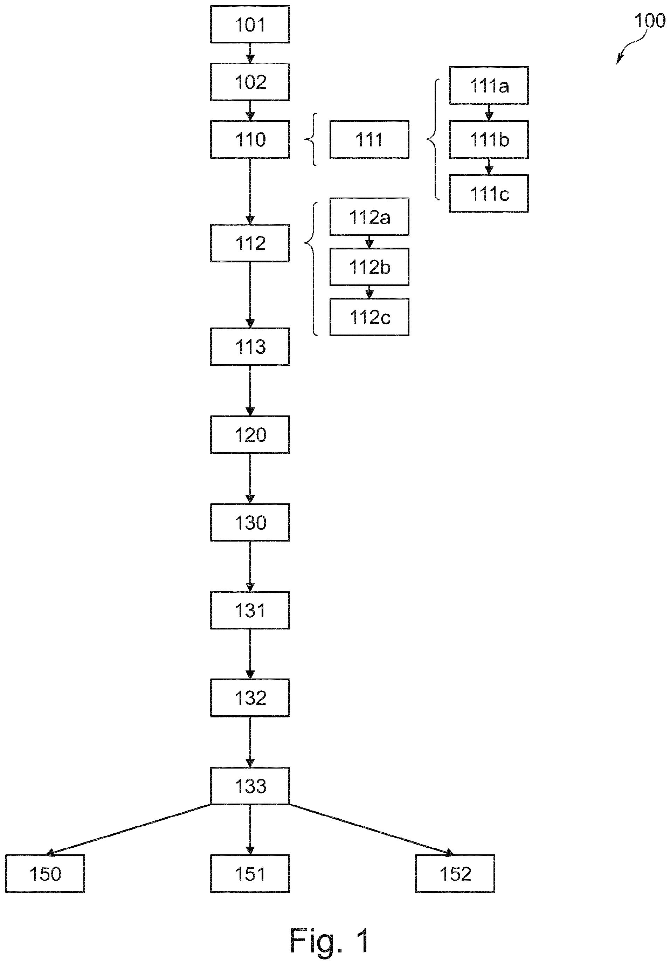

Figur 1 zeigt ein Verfahrensschema eines erfindungsgemäßen Verfahrens 100 zum Klassifizieren von Objekten. Das Verfahren 100 umfasst eine Bereitstellung 110 von einem jeweiligen gemittelten Merkmalsvektor 30 für eine Vielzahl von Klassen. Mittels eines Klassifikators 10 wird ein Merkmalsvektor auf Basis von Sensordaten ermittelt 120. Es wird eine Kosinusähnlichkeit zwischen dem ermittelten Merkmalsvektor und den jeweiligen gemittelten Merkmalsvektoren für alle Klassen ermittelt 130 und die Kosinusähnlichkeiten mit einem zuvor ermittelten Schwellenwert verglichen 131. Bei Unterschreitung der Schwellenwerte für alle Klassen wird ein nicht von der Vielzahl der Klassen vertretenes Szenario erkannt 133.

Das Verfahren 100 kann insbesondere das Training 101 des Klassifikators 10 und das Training 102 des GAN 20 umfassen. Dies erfolgt insbesondere gemeinsam.

Ferner können die jeweiligen gemittelten Merkmalsvektoren 30 für die Vielzahl von Klassen ermittelt werden 111. Hierzu wird insbesondere ein Merkmalsvektor für jedes erste Trainingssample einer jeweiligen Klasse ermittelt 111a, die entsprechenden Merkmalsvektoren aller ersten Trainingssamples für die jeweilige Klasse addiert 111b und durch die Anzahl der ersten Trainingssamples der Klasse dividiert 111c.

Ferner kann der jeweilige Schwellenwert für die Vielzahl von Klassen ermittelt werden 112. Dies geschieht insbesondere durch Ermittlung 112a der Kosinusähnlichkeiten des Merkmalsvektors jedes ersten Trainingssamples mit dem gemittelten Merkmalsvektor 30 der Klasse. Es wird die gemittelte Kosinusähnlichkeit oder die kleinste Kosinusähnlichkeit ermittelt 112b. Die gemittelte Kosinusähnlichkeit wird insbesondere durch Addieren der Kosinusähnlichkeiten aller ersten Trainingssamples und durch Division durch die Anzahl der ersten Trainingssamples berechnet. Das Ermitteln der kleinsten Kosinusähnlichkeit erfolgt einfach durch Feststellen des kleinsten Wertes der Kosinusähnlichkeiten. Die gemittelte Kosinusähnlichkeit oder die kleinste Kosinusähnlichkeit wird als Schwellenwert festgelegt 112c.

Als weiteren Parameter zum Feststellen, ob die Sensordaten ein in den Trainingsdaten vertretenes Szenario umfassen oder nicht, kann eine Mahalanobis-Distanz zwischen einer Kovarianzmatrix dem gemittelten Merkmalsvektor und dem ermittelten Merkmalsvektor ermittelt werden 132. Basierend auf der Mahalanobis-Distanz und der $\chi^2$-Verteilung kann für jede Klasse ein Bezugswert bestimmt werden, der mit dem jeweiligen Schwellenwert der Klasse verglichen wird. Die Kovarianzmatrix für jede Klasse kann zuvor bestimmt werden 113.

Bei Unterschreitung der Schwellenwerte für alle Klassen kann das erkannte Szenario als unbekannt im Vergleich zu den Trainingsdaten gelabelt werden 150, dem Szenario eine minimale Konfidenz zugeordnet werden 151 und/oder die entsprechenden Sensordaten als Ergänzung zu den Trainingsdaten abgespeichert werden 152.

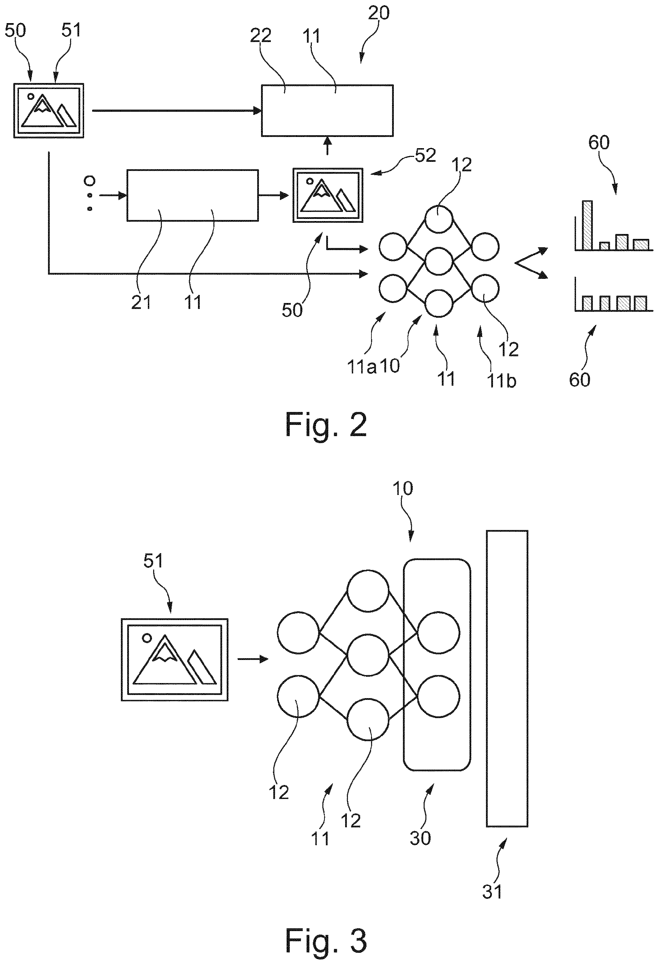

Figur 2 zeigt das Training eines Klassifikators 10 und eines GAN 20, wobei das GAN 20 einen Generator 21 und einen Diskriminator 22 umfasst. Als Input für den Diskriminator 22 werden erste Trainingssamples 51 zur Verfügung gestellt und zweite Trainingssamples 52 durch den Generator 21. Der Generator 21 erzeugt zweite Trainingssamples 52 an den Entscheidungsgrenzen des Klassifikators 10 und versucht somit den Diskriminator 22 zu täuschen und den Klassifikator 10 den zweiten Trainingssamples 52 eine gleichverteilte Wahrscheinlichkeit zuweisen zu lassen.

Sowohl bei dem Klassifikator 10 als auch bei dem Generator 21 und bei dem Diskriminator 22 handelt es sich um neuronale Netzwerke 11. Bei dem Klassifikator 10 sind beispielhaft Neuronen 12, die in Schichten angeordnet sind, dargestellt. Das neuronale Netzwerk 11 des Klassifikators 10 kann funktionell in zwei Einheiten geteilt werden, eine erste Einheit 11a und eine zweite Einheit 11b. Die erste Einheit 11a ist als Feature Extractor ausgebildet, während die zweite Einheit 11b als Klassifikationseinheit dient.

Rechts neben dem Klassifikator 10 sind ermittelte Unsicherheiten 60 der Softmax-Normalisierung 31 in tabellarischer Form aufgeteilt auf die Vielzahl der Klassen dargestellt. Im oberen Teil sind die Unsicherheiten 60 der Softmax-Normalisierung 31 für ein erstes Trainingssample gezeigt, wobei die erste Klasse mit Abstand am höchsten, sodass zumindest diese Klasse mit einer hohen Konfidenz zugeordnet wird. Da im Training noch kein gemittelter Merkmalsvektor vorliegt, wird mit den Unsicherheiten, die nach der Softmax-Normalisierung erhalten wird, gearbeitet.

Anders ist es in dem unteren Beispiel, dass ein zweites Trainingssample zeigt, in dem die Unsicherheiten 60 der Softmax-Normalisierung 31 für alle Klassen gleichverteilt sind.

Figur 3 stellt dar, wie nach dem Training der Klassifikator 10 einen gemittelten Merkmalsvektor 30, und zwar vor einer Softmax-Normalisierung 31, ermittelt. Dies geschieht in der letzten Schicht der zweiten Einheit, also des Klassifikators, vor der Softmax-Normalisierung 31, und zwar auf Basis aller ersten Trainingssamples 51, entsprechend für jede Klasse. Im Anwendungsfall wird dann auf Basis von Sensordaten und der gemittelten Merkmalsvektoren 30 für die Klassen die Kosinusähnlichkeit entsprechend Figur 1 bestimmt.

**Beispiele der neuronalen Netzwerke**

Der Feature-Extractor kann wie folgt aufgebaut sein:

Ausführung als MLP:

- Input: Batchsize × 2048 × 3
- Layer 0:
    - Layer 0.1: Multi Layer Perceptrons (MLP)
        - Anzahl Funktionen: 64
        - Kernel 1x3
        - Batchnormalisierung
        - Aktivierungsfunktion: ReLU

- Layer 0.2: MLPs
    - Anzahl Funktionen: 128
    - Kernel 1x1
    - Batchnormalisierung
    - Aktivierungsfunktion: ReLU
- Layer 0.3: MLPs
    - Anzahl Funktionen: 1024
    - Kernel1x1
    - Batchnormalisierung
    - Aktivierungsfunktion: ReLU
- Layer 0.4: Fully Connected
    - Output: 512
    - Batchnormalisierung
    - Aktivierungsfunktion: ReLU
- Layer 0.5: Fully Connected
    - Output: 256
    - Batchnormalisierung
    - Aktivierungsfunktion: ReLU
- Layer 0.5: Fully Connected
    - Output: 9
    - Keine Aktivierungsfunktion
    - Initialisierung der Variablen mit 0
- Layer 0.6: Addition mit Einheitsmatrix [1 0 0 0 1 0 0 0 1]
- Output: Batchsize × 3 × 3

* Layer 1: Input * Output Layer 0
* Layer 2: MLPs
    - Anzahl Funktionen: 64
    - Kernel 1x3
    - Batchnormalisierung
    - Aktivierungsfunktion: ReLU
* Layer 3: MLPs
    - Anzahl Funktionen: 64
    - Kernel 1×1
    - Batchnormalisierung
    - Aktivierungsfunktion: ReLU
* Layer 4: Lernen von Matrix für Multiplikation
    - Layer 4.1: MLP
        - Anzahl Funktionen: 64
        - Kernel1x1
        - Batchnormalisierung
        - Aktivierungsfunktion: ReLU

- Layer 4.2: MLPs
  - Anzahl Funktionen: 128
  - Kernel 1x1
  - Batchnormalisierung
  - Aktivierungsfunktion: ReLU
- Layer 4.3: MLPs
  - Anzahl Funktionen: 1024
  - Kernel1x1
  - Batchnormalisierung
  - Aktivierungsfunktion: ReLU
- Layer 4.4: Fully Connected
  - Output: 512
  - Batchnormalisierung
  - Aktivierungsfunktion: ReLU
- Layer 4.5: Fully Connected
  - Output: 256
  - Batchnormalisierung
  - Aktivierungsfunktion: ReLU
- Layer 4.5: Fully Connected
  - Output: 4096
  - Keine Aktivierungsfunktion
  - Initialisierung der Variablen mit 0
- Layer 4.6: Addition mit Einheitsmatrix (Größe 64)
- Output: Batchsize $\times$ 64 $\times$ 64

- Layer 5: Layer 3 * Output Layer 4
- Layer 6: MLPs
  - Anzahl Funktionen: 64
  - Kernel 1$\times$1
  - Batchnormalisierung
  - Aktivierungsfunktion: ReLU
- Layer 7: MLPs
  - Anzahl Funktionen: 128
  - Kernel 1$\times$1
  - Batchnormalisierung
  - Aktivierungsfunktion: ReLU
- Layer 8: MLPs
  - Anzahl Funktionen: 512
  - Kernel 1$\times$1
  - Batchnormalisierung
  - Aktivierungsfunktion: ReLU
- Layer 9: Klassifikationseinheit

- ◦ Layer 9.1 Fully Connected Layer:
    - ▪ Anzahl Output Neuronen: 512
    - ▪ Aktivierungsfunktion: ReLU
- ◦ Layer 9.2: Dropout
    - ▪ Dropout rate: 0.5
- ◦ Layer 9.3 Fully Connected Layer:
    - ▪ Anzahl Output Neuronen: 512
    - ▪ Aktivierungsfunktion: ReLU
- ◦ Layer 9.4: Dropout
    - ▪ Dropout rate: 0.5
- ◦ Layer 9.5: Fully Connected Layer (= bottle neck vector):
    - ▪ Anzahl Output Neuronen: Anzahl der zu klassifizierenden Klassen

- GGF Softmax Normalisierungslayer

Ausführung als CNN

- Input: Batchsize × 80 × 128 × 2 (2 Kanäle für solid state: Intensität und Tiefe)
- Layer 1: Convolution
    - ◦ Kernelsize: 3x3
    - ◦ Anzahl Output Feature maps: 64
    - ◦ Aktivierung: ReLU
- Layer 2: Convolution
    - ◦ Kernelsize: 3x3
    - ◦ Anzahl Output Feature maps: 64
    - ◦ Aktivierung: ReLU
- Layer 3: Max Pooling
    - ◦ Kernelsize: 2x2
- Layer 4: Convolution
    - ◦ Kernelsize: 3x3
    - ◦ Anzahl Output Feature maps: 128
    - ◦ Aktivierung: ReLU
- Layer 5: Convolution
    - ◦ Kernelsize: 3x3
    - ◦ Anzahl Output Feature maps: 128
    - ◦ Aktivierung: ReLU
- Layer 6: Max Pooling
    - ◦ Kernelsize: 2x2

- Layer 7: Convolution
  - Kernelsize: 3x3
  - Anzahl Output Feature maps: 256
  - Aktivierung: ReLU
- Layer 8: Convolution
  - Kernelsize: 3x3
  - Anzahl Output Feature maps: 256
  - Aktivierung: ReLU
- Layer 9: Max Pooling
  - Kernelsize: 2x2
- Layer 10: Convolution
  - Kernelsize: 3x3
  - Anzahl Output Feature maps: 512
  - Aktivierung: ReLU
- Layer 11: Convolution
  - Kernelsize: 3x3
  - Anzahl Output Feature maps: 512
  - Aktivierung: ReLU
- Layer 12: Max Pooling
  - Kernelsize: 2x2
- Layer 13: Convolution
  - Kernelsize: 3x3
  - Anzahl Output Feature maps: 512
  - Aktivierung: ReLU
- Layer 14: Convolution
  - Kernelsize: 3x3
  - Anzahl Output Feature maps: 512
  - Aktivierung: ReLU
- Layer 15: Max Pooling
  - Kernelsize: 2x2
- Layer 16: Flatten der Features (Vorbereitung, in anderen Worten Anpassung der Dimension, als Input für Klassifikator)
- Layer 17: Klassifikationseinheit
  - Layer 17.1 Fully Connected Layer:
    - Anzahl Output Neuronen: 512
    - Aktivierungsfunktion: ReLU
  - Layer 17.2: Dropout

        - Dropout rate: 0.5

    - Layer 17.3 Fully Connected Layer:

        - Anzahl Output Neuronen: 512
        - Aktivierungsfunktion: ReLU

    - Layer 17.4: Dropout

        - Dropout rate: 0.5

    - Layer 17.5: Fully Connected Layer (= bottle neck Vektor):

        - Anzahl Output Neuronen: Anzahl der zu klassifizierenden Klassen

- GGF Normalisierung mit Softmax Normalisierung

Das Anlernen des Klassifikators und des GAN kann durch folgende Parameter bestimmt sein:

- Optimizer: AdamOptimizer (jeweils eigener Optimizier für Diskriminator, Generator und Klassifikator
- LearningRate: 0.0001

    - Exponentielles decay: Staircase

        - Die Learningrate nimmt wie eine Stufenfunktion ab. Nach 200000 Schritten nimmt sie um die Hälfte ab, bis sie ein Minimum von 0.00001 erreicht hat, wonach sie konstant bleibt

- Batchsize: 32
- Initialisierung von allen Variablen (ausgenommen Initialisierung mit 0): Xavier Initialisierung
- Gesamtepochen: 100

**Bezugszeichenliste**

10 Klassifikator
11 neuronales Netzwerk
11a erste Einheit
11b zweite Einheit
12 Neuron

20 GAN
21 Generator
22 Diskriminator

30 gemittelter Merkmalsvektor
31 Softmax Normalisierung

50 Trainingsdaten
51 erste Trainingssamples
52 zweite Trainingssamples

60 Unsicherheiten

100 Verfahren

101 Training des Klassifikators
102 Training des GAN

110 Bereitstellung von einem jeweiligen gemittelten Merkmalsvektor für eine Vielzahl von Klassen
111 Ermitteln von einem jeweiligen gemittelten Merkmalsvektor für die Vielzahl von Klassen
111a Ermittlung eines Merkmalsvektors für jedes erste Trainingssample einer Klasse
111b Addieren der Merkmalsvektoren aller ersten Trainingssamples einer Klasse zum Erhalten eines addierten Merkmalsvektors
111c Dividieren des addierten Merkmalsvektors durch die Anzahl der ersten Trainingssamples der Klasse
112 Ermitteln eines jeweiligen Schwellenwertes für die Vielzahl von Klassen
112a Ermittlung der Kosinusähnlichkeit des Merkmalsvektors jedes ersten Trainingssamples mit dem gemittelten Merkmalsvektor der Klasse
112b Ermittlung der gemittelten Kosinusähnlichkeit oder der kleinsten Kosinusähnlichkeit der ersten Trainingsdaten der Klasse
112c Festlegen der gemittelten Kosinusähnlichkeit oder der kleinsten Kosinusähnlichkeit als Schwellenwert der Klasse
113 Ermitteln einer Kovarianz Matrix

120 Ermitteln eines Merkmalsvektors auf Basis von Sensordaten

130 Ermittlung einer Kosinusähnlichkeit zwischen dem Merkmalsvektor und einem jeweiligen gemittelten Merkmalsvektor für die Vielzahl von Klassen
131 Vergleich der jeweiligen Kosinusähnlichkeit mit einem für jede Klasse zuvor ermittelten Schwellenwert
132 Ermitteln einer Mahalanobis-Distanz zwischen einer Kovarianz Matrix, dem gemittelten Merkmalsvektor und dem ermittelten Merkmalsvektor
133 Erkennen eines nicht von der Vielzahl der Klassen vertretenden Szenarios bei Unterschreitung der Schwellenwerte für alle Klassen

150 bei Unterschreitung der Schwellenwerte für alle Klassen Labeln des erkannten Szenarios als unbekannt im Vergleich zu den Trainingsdaten
151 bei Unterschreitung der Schwellenwerte für alle Klassen Zuordnung einer zuvor definierten minimalen Konfidenz zum erkannten Szenario
152 Abspeichern der Sensordaten als Ergänzung zu den Trainingsdaten

**Patentansprüche**

**1.** Verfahren (100) zum Klassifizieren von Sensordaten,

welches eine Bereitstellung (110) von einem jeweiligen gemittelten Merkmalsvektor (30) für eine Vielzahl von Klassen umfasst,
wobei das Verfahren (100) die folgenden Schritte durchgeführt mittels eines Klassifikators (10) umfasst, wobei der Klassifikator (10) mindestens ein auf Basis von Trainingsdaten (50) trainiertes neuronales Netzwerk (11) umfasst:

- eine Ermittlung (120) eines Merkmalsvektors auf Basis von Sensordaten, wobei es sich bei den Sensordaten um Lidar-Daten handelt,
- eine jeweilige Ermittlung (130) einer Kosinusähnlichkeit zwischen dem Merkmalsvektor und dem jeweiligen gemittelten Merkmalsvektor (30) für die Vielzahl von Klassen,
- einen Vergleich (131) der jeweiligen Kosinusähnlichkeit mit einem für jede Klasse zuvor festgelegten Schwellenwert, und
- ein Erkennen (133) eines nicht von der Vielzahl der Klassen vertretenden Szenarios bei Unterschreitung der Schwellenwerte für alle Klassen,

wobei das Verfahren ferner ein Training (101) des Klassifikators (10) anhand der Trainingsdaten (50) umfasst,
wobei die Trainingsdaten (50) erste Trainingssamples (51) und zweite Trainingssamples (52) umfassen,
wobei die zweiten Trainingssamples (52) mittels eines Generative Adversarial Networks (GAN; 20) erzeugt werden,
wobei das GAN einen Generator (21) und einen Diskriminator (22) umfasst, wobei die ersten Trainingssamples (51) auf einer Aufnahme von Szenarien mittels eines Sensors basieren, wobei für jede Klasse der Schwellenwert ermittelt wird (112),

wobei der Schwellenwert einer Klasse durch die folgenden Schritte ermittelt wird:

- Ermittlung (112a) der Kosinusähnlichkeit des Merkmalsvektors jedes ersten Trainingssamples mit dem gemittelten Merkmalsvektor der Klasse,
- Ermittlung (112b) der gemittelten Kosinusähnlichkeit oder der kleinsten Kosinusähnlichkeit der ersten Trainingsdaten der Klasse;
- Festlegen (112c) der gemittelten Kosinusähnlichkeit oder der kleinsten Kosinusähnlichkeit als Schwellenwert der Klasse.

**2.** Verfahren (100) nach Anspruch 1,
**dadurch gekennzeichnet, dass**
der Klassifikator (10) ferner eine Mahalanobis-Distanz zwischen einer Kovarianzmatrix und dem gemittelten Merkmalsvektor (30) und dem ermittelten Merkmalsvektor für jede Klasse ermittelt (132).

**3.** Verfahren (100) nach Anspruch 2,
**dadurch gekennzeichnet, dass**

auf Basis der Mahalanobis-Distanz und der $\chi^2$-Verteiiung ein Bezugswert für jede Klasse ermittelt wird,
wobei der Bezugswert mit einem für jede Klasse festgelegten Schwellenwert verglichen wird,
wobei das Verfahren (100) ein Erkennen (133) eines nicht von der Vielzahl der Klassen vertretenden Szenarios bei Unterschreitung der Schwellenwerte für alle Klassen umfasst.

**4.** Verfahren (100) nach einem der vorangehenden Ansprüche,
**dadurch gekennzeichnet, dass**
bei Unterschreitung der Schwellenwerte für alle Klassen das erkannte Szenario als unbekannt im Vergleich zu den Trainingsdaten (50) gelabelt wird (150).

**5.** Verfahren (100) nach einem der vorangehenden Ansprüche,
**dadurch gekennzeichnet, dass**
bei Unterschreitung der Schwellenwerte für alle Klassen dem erkannten Szenario eine zuvor definierte minimale Konfidenz zugeordnet wird (151).

**6.** Verfahren (100) nach einem der vorangehenden Ansprüche,
**dadurch gekennzeichnet, dass**
das Verfahren ein Abspeichern (152) der Sensordaten als Ergänzung zu den Trainingsdaten (50) umfasst.

**7.** Verfahren (100) nach Anspruch 1,
**dadurch gekennzeichnet, dass**
das Training (101) des Klassifikators (10) auf Basis eines Cross Entropy Loss auf Basis der ersten Trainingssamples (51) addiert mit einer Kullback-Leibler Divergenz auf Basis der der zweiten Trainingssamples (52) durchgeführt wird.

**8.** Verfahren (100) nach einem der Ansprüche 1 oder 7,
**dadurch gekennzeichnet, dass**

das Verfahren ein Training (102) des GAN (20), nämlich des Generators (21) und des Diskriminators (22), umfasst,
wobei das Training (101) des Klassifikators (10) und das Training (102) des GAN (20) gemeinsam erfolgen.

**9.** Verfahren (100) nach Anspruch 8,
**dadurch gekennzeichnet, dass**
das Training des Generators (21) auf Basis eines Binary Cross Entropy Loss auf Basis der zweiten Trainingssamples (52) addiert mit einer Kullback-Leibler Divergenz auf Basis der zweiten Trainingssamples (52) durchgeführt wird.

**10.** Verfahren (100) nach einem der Ansprüche 1 oder 7 bis 9,
**dadurch gekennzeichnet, dass**

für jede Klasse der gemittelte Merkmalsvektor (30) ermittelt wird (111), wobei die Trainingsdaten (50) eine Anzahl von ersten Trainingssamples (51) pro Klasse umfasst,

wobei der gemittelte Merkmalsvektor (30) einer Klasse durch die folgenden Schritte ermittelt wird:

- Ermittlung (111a) eines Merkmalsvektors für jedes erste Trainingssample (51) einer Klasse,
- Addieren (111b) der Merkmalsvektoren aller ersten Trainingssamples (51) einer Klasse zum Erhalten eines addierten Merkmalsvektors
- Dividieren (111c) des addierten Merkmalsvektors durch die Anzahl der ersten Trainingssamples der Klasse.

**11.** Vorrichtung zum Klassifizieren von Sensordaten,
**dadurch gekennzeichnet, dass**
die Vorrichtung einen Klassifikator (10) umfasst und dazu ausgebildet ist ein Verfahren (100) nach einem der Ansprüche 1 bis 10 durchzuführen.

**12.** Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 10 im Zusammenspiel mit einer Vorrichtung gemäß Anspruch 11 durchzuführen.

**13.** Computerprogrammprodukt umfassend ein computerlesbares Speichermedium nach Anspruch 12.

## Claims

**1.** A method (100) for classifying sensor data

which comprises providing (110) a respective averaged feature vector (30) for a plurality of classes,
wherein the method (100) comprises the following steps carried out by means of a classifier (10), wherein the classifier (10) comprises at least one neural network (11) trained on the basis of training data (50):

- determining (120) a feature vector on the basis of sensor data, wherein the sensor data is lidar data,
- respective determining (130) a cosine similarity between the feature vector and the respective averaged feature vector (30) for the plurality of classes,
- comparing (131) the respective cosine similarity with a threshold value established for each class beforehand, and
- detecting (133) a scenario not represented by the plurality of classes if the threshold values for all classes are not reached,

wherein the method further comprises training (101) the classifier (10) according to the training data (50),
wherein the training data (50) comprises first training samples (51) and second training samples (52),
wherein the second training samples (52) are generated by means of a Generative Adversarial Network (GAN; 20),
wherein the GAN comprises a generator (21) and a discriminator (22), wherein the first training samples (51) are based on recording scenarios by means of a sensor, wherein the threshold value is determined (112) for each class,
wherein the threshold value of a class is determined by the following steps:

- determining (112a) the cosine similarity of the feature vector of each first training sample with the averaged feature vector of the class,
- determining (112b) the averaged cosine similarity or the smallest cosine similarity of the first training data of the class;
- establishing (112c) the averaged cosine similarity or the smallest cosine similarity as the threshold value of the class.

**2.** The method (100) according to claim 1,
**characterized in that**
the classifier (10) further determines (132) a Mahalanobis distance between a covariance matrix and the averaged feature vector (30) and the determined feature vector for each class.

**3.** The method (100) according to claim 2,

**characterized in that**

a reference value is determined for each class on the basis of the Mahalanobis distance and the $\chi^2$ distribution, wherein the reference value is compared with a threshold value established for each class,
wherein the method (100) comprises detecting (133) a scenario not represented by the plurality of classes if the threshold values for all classes are not reached.

**4.** The method (100) according to one of the preceding claims,
**characterized in that**
if the threshold values for all classes are not reached, the detected scenario is labelled (150) as unknown compared to the training data (50).

**5.** The method (100) according to one of the preceding claims,
**characterized in that**
if the threshold values for all classes are not reached, a previously defined minimum confidence level is assigned to the detected scenario (151).

**6.** The method (100) according to one of the preceding claims,
**characterized in that**
the method comprises storing (152) the sensor data as a supplement to the training data (50).

**7.** The method (100) according to claim 1,
**characterized in that**
the training (101) of the classifier (10) is carried out on the basis of a cross entropy loss on the basis of the first training samples (51) added with a Kullback-Leibler divergence on the basis of the second training samples (52).

**8.** The method (100) according to one of claims 1 or 7,
**characterized in that**

the method comprises training (102) the GAN (20), namely the generator (21) and the discriminator (22),
wherein the training (101) of the classifier (10) and the training (102) of the GAN (20) are carried out together.

**9.** The method (100) according to claim 8,
**characterized in that**
the training of the generator (21) is performed on the basis of a binary cross entropy loss on the basis of the second training samples (52) added with a Kullback-Leibler divergence on the basis of the second training samples (52).

**10.** The method (100) according to one of claims 1 or 7 to 9,
**characterized in that**

the averaged feature vector (30) is determined for each class (111), wherein the training data (50) comprises a number of first training samples (51) per class,
wherein the averaged feature vector (30) of a class is determined by the following steps:

- determining (111a) a feature vector for each first training sample (51) of a class,
- adding (111b) the feature vectors of all first training samples (51) of a class to obtain an added feature vector
- dividing (111c) the added feature vector by the number of the first training samples of the class.

**11.** Device for classifying sensor data,
**characterized in that**
the device comprises a classifier (10) and is configured to carry out a method (100) according to one of claims 1 to 10.

**12.** A computer-readable storage medium on which is stored a program which, after being loaded into the memory of the computer, enables a computer to carry out a method according to one of claims 1 to 10 in cooperation with a device according to claim 11.

**13.** A computer program product comprising a computer-readable storage medium according to claim 12.

## Revendications

1. Procédé (100) de classification de données de capteurs,

   qui comprend la fourniture (110) d'un vecteur de caractéristiques moyenné respectif (30) pour une pluralité de classes,
   le procédé (100) comprenant les étapes suivantes effectuées au moyen d'un classificateur (10), le classificateur (10) comprenant au moins un réseau neuronal (11) entraîné sur la base de données d'apprentissage (50) :

   • une détermination (120) d'un vecteur de caractéristiques sur la base de données de capteur, les données de capteur étant des données Lidar,
   • une détermination respective (130) d'une similitude de cosinus entre le vecteur de caractéristiques et le vecteur de caractéristiques moyenné respectif (30) pour la pluralité de classes,
   • une comparaison (131) de la similitude de cosinus respective avec une valeur de seuil prédéterminée pour chaque classe, et
   • une détection (133) d'un scénario non représenté par la pluralité de classes lorsque les seuils de toutes les classes sont dépassés vers le bas,

   dans lequel le procédé comprend en outre un apprentissage (101) du classificateur (10) à partir des données d'apprentissage (50),
   dans lequel les données d'apprentissage (50) comprennent des premiers échantillons d'apprentissage (51) et des seconds échantillons d'apprentissage (52), dans lequel les deuxièmes échantillons d'apprentissage (52) sont générés au moyen d'un réseau additif génératif (GAN ; 20),
   le GAN comprenant un générateur (21) et un discriminateur (22),
   les premiers échantillons d'apprentissage (51) étant basés sur un enregistrement de scénarios au moyen d'un capteur, la valeur seuil étant déterminée pour chaque classe (112),
   dans lequel la valeur seuil d'une classe est déterminée par les étapes suivantes :

   • déterminer (112a) la similitude de cosinus du vecteur de caractéristiques de chaque premier échantillon d'apprentissage avec le vecteur de caractéristiques moyen de la classe,
   • détermination (112b) de la similitude de cosinus moyenne ou de la similitude de cosinus la plus faible des premières données d'apprentissage de la classe ;
   • Définir (112c) la similitude de cosinus moyenne ou la similitude de cosinus la plus petite comme valeur seuil de la classe.

2. Procédé (100) selon la revendication 1,
   **caractérisé en ce que**
   le classificateur (10) détermine en outre une distance de Mahalanobis entre une matrice de covariance et le vecteur de caractéristiques moyenné (30) et le vecteur de caractéristiques déterminé pour chaque classe (132).

3. Procédé (100) selon la revendication 2,
   **caractérisé en ce que**

   une valeur de référence est déterminée pour chaque classe sur la base de la distance de Mahalanobis et de la distribution $\chi 2$ ,
   la valeur de référence étant comparée à une valeur seuil définie pour chaque classe,
   dans lequel le procédé (100) comprend une détection (133) d'un scénario non représenté par la pluralité de classes lorsque les seuils pour toutes les classes sont dépassés vers le bas.

4. Procédé (100) selon l'une quelconque des revendications précédentes,
   **caractérisé en ce que**
   si les seuils pour toutes les classes ne sont pas atteints, le scénario détecté est labellisé comme inconnu par rapport aux données d'apprentissage (50) (150).

5. Procédé (100) selon l'une quelconque des revendications précédentes,
   **caractérisé en ce que**
   lorsque les seuils de toutes les classes ne sont pas atteints, un niveau de confiance minimal défini au préalable est attribué au scénario identifié (151).

6. Procédé (100) selon l'une quelconque des revendications précédentes,
**caractérisé en ce que**
le procédé comprend un stockage (152) des données de capteur en complément des données d'apprentissage (50).

7. Procédé (100) selon la revendication 1,
**caractérisé en ce que**
l'apprentissage (101) du classificateur (10) est effectué sur la base d'une perte d'entropie croisée sur la base des premiers échantillons d'apprentissage (51) additionnée à une divergence de Kullback-Leibler sur la base des seconds échantillons d'apprentissage (52).

8. Procédé (100) selon l'une des revendications 1 ou 7,
**caractérisé en ce que**

   le procédé comprend un entraînement (102) du GAN (20), à savoir du générateur (21) et du discriminateur (22), l'entraînement (101) du classificateur (10) et l'entraînement (102) du GAN (20) étant effectués conjointement.

9. Procédé (100) selon la revendication 8,
**caractérisé en ce que**
l'apprentissage du générateur (21) est effectué sur la base d'une perte d'entropie croisée binaire sur la base des deuxièmes échantillons d'apprentissage (52) additionnés à une divergence de Kullback-Leibler sur la base des deuxièmes échantillons d'apprentissage (52).

10. Procédé (100) selon l'une des revendications 1 ou 7 à 9,
**caractérisé en ce que**

   le vecteur caractéristique moyen (30) est déterminé (111) pour chaque classe, dans lequel les données d'apprentissage (50) comprennent un nombre de premiers échantillons d'apprentissage (51) par classe,
   le vecteur caractéristique moyen (30) d'une classe étant déterminé par les étapes suivantes :

   - la détermination (111a) d'un vecteur de caractéristiques pour chaque premier échantillon d'apprentissage (51) d'une classe,
   - additionner (111b) les vecteurs de caractéristiques de tous les premiers échantillons d'apprentissage (51) d'une classe pour obtenir un vecteur de caractéristiques additionné
   - diviser (111c) le vecteur de caractéristiques additionné par le nombre des premiers échantillons d'apprentissage de la classe.

11. Dispositif de classification des données de capteurs,
**caractérisé en ce que**
le dispositif comprend un classificateur (10) et est adapté pour mettre en oeuvre un procédé (100) selon l'une des revendications 1 à 10.

12. Support de stockage lisible par ordinateur sur lequel est stocké un programme qui, après avoir été chargé dans la mémoire de l'ordinateur, permet à un ordinateur d'exécuter un procédé selon l'une quelconque des revendications 1 à 10 en coopération avec un dispositif selon la revendication 11.

13. Produit de programme d'ordinateur comprenant un support de stockage lisible par ordinateur selon la revendication 12.

100
101
102
110
111
111a
111b
111c
112
112a
112b
112c
113
120
130
131
132
133
150
151
152

Fig. 1

50
51
22
11
20
52
12
60
21
11
50
11a
10
11
12
11b
60

Fig. 2

10
51
12
11
12
30
31

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- Identifying Unknown Instances for Autonomous Driving. **KELVIN WONG et al.** ARXIV.ORG. CORNELL UNIVERSITY LIBRARY, 24. Oktober 2019
- **MATTHEW WALLINGFORD.** *In the Wild: From ML Models to Pragmatic ML Systems*
- **XINGYU CHEN.** *A Boundary Based Out-of-Distribution Classifier for Generalized Zero-Shot Learning*